# EUROPEAN PATENT APPLICATION

(11) **EP 1 859 892 A2**
(43) Date of publication of application: **28.11.2007**
(21) Application number: 07108441.2
(22) Date of filing: 18.05.2007
(51) Int. Cl.: B23K 26/08

(54) **Combined processing machine and processing method using the same**

(30) Priority: 23.05.2006 JP 2006142834
(71) Applicant: JTEKT CORPORATION, Chuo-ku Osaka-shi Osaka 542-8502 (JP)
(72) Inventor: NAGAHAMA, Takaya, Osaka-shi, Osaka 542-8502 (JP); WAKAZONO, Yoshio, Osaka-shi, Osaka 542-8502 (JP); NISHI, Koji, Osaka-shi, Osaka 542-8502 (JP); OTA, Hiromichi, Osaka-shi, Osaka 542-8502 (JP)
(74) Representative: TBK-Patent

(57) **Abstract**

A combined processing machine has a workpiece processing unit that is operable to move within a X-Z plane defined by an X-axis preset in a predetermined direction and a Z-axis perpendicular to the X-axis, a heat treatment tool to apply a heat treatment to a workpiece, and a tool mounting unit that is adapted to attach at least one of a shaping tool to shape the workpiece and a finishing tool to finish the workpiece to the workpiece processing unit. The heat treatment tool has a light focusing head to focus a light supplied through a light guiding portion from a laser oscillator on the workpiece.

## Description

The present application is based on Japanese patent application No.2006-142834, the entire contents of which are incorporated herein by reference.

### BACKGROUND OF THE INVENTION

### 1. FIELD OF THE INVENTION

This invention relates to a combined processing machine that processes a workpiece by using various processing tools and multiple processing methods and, in particular, to a combined processing machine that uses a heat treatment tool such as a quenching tool. Also, this invention relates to a processing method using the combined processing machine.

### 2. DESCRIPTION OF THE RELATED ART

Conventionally, various machine tools such as a lathe turning machine, a drilling machine, a boring machine, a milling machine, a planing machine, a broaching machine and a grinding machine are used according to kind of processing. A machine is also known which can be adapted to not only single process but also various combined processes by means of NC control. Further, so-called combined processing machines are proposed which can perform collectively multiple processes, e.g., a lathe turning process and a grinding process. Furthermore, a combined processing machine with a heat treatment device is proposed (See, e.g., JP-A-S59-50983).

Although heat treatment devices such as a high-frequency heat treatment device and a carburizing heat treatment device are conventionally used, they are so large that they must cause an increase in initial cost and running cost. In addition, they are not adapted to a collective processing to be conducted without detaching a workpiece during a process from a crude processing through a heat treatment to a finishing.

In contrast, the combined processing machine of JP-A-S59-50983 uses, as the heat treatment device, a laser oscillator equipped nearby, where a laser processing is conducted by irradiating a part of a processed material with a light supplied from the laser oscillator through a mirror mounted on a machine tool and concentrated by a condensing lens. Therefore, the processing operations of the machine tool and the laser oscillator can be simultaneously performed on the one machine tool. Thus, since the multiple processing works can be performed collectively, the number of workers decreases and the working efficiency increases.

However, the combined processing machine of JP-A-S59-50983 fails to disclose a suitable combination of the laser oscillator to the combined processing machine. Therefore, it is problematic in terms of laser efficiency and space-saving performance.

### SUMMARY OF THE INVENTION

It is an object of the invention to provide a combined processing machine that can be enhanced in laser efficiency and space-saving performance and adapted to a collective processing to be conducted without detaching a workpiece from a main spindle thereof during a process from a crude processing through a heat treatment to a finishing, as well as a processing method using the combined processing machine.

(1) According to one embodiment of the invention, a combined processing machine comprises:
a workpiece processing unit that is operable to move within a X-Z plane defined by an X-axis preset in a predetermined direction and a Z-axis perpendicular to the X-axis;
a heat treatment tool to apply a heat treatment to a. workpiece; and
a tool mounting unit that is adapted to attach at least one of a shaping tool to shape the workpiece and a finishing tool to finish the workpiece to the workpiece processing unit,
wherein the heat treatment tool comprises a light focusing head to focus a light supplied through a light guiding portion from a laser oscillator on the workpiece.

In the above embodiment (1), the following modifications and changes can be made.
(i) The heat treatment tool is previously attached to the workpiece processing unit.
(ii) The heat treatment tool is attached to the workpiece processing unit selectively in combination with at least one of the shaping tool and the finishing tool.
(iii) The laser oscillator comprises a semiconductor laser to oscillate a near-infrared laser light at a wavelength of **800** nm to **1000** nm, and the light guiding portion comprises an optical fiber.
(iv) The light focusing head is fixed to the workpiece processing unit through a clamping portion.
(v) The combined processing machine further comprising a cooling device that is operable to immediately cool the workpiece heated by the near-infrared laser light emitted from the heat treatment tool to quench the workpiece.
(vi) The cooling device comprises a coolant supplying nozzle to supply a coolant to the workpiece during the shaping or the finishing.

(2) According to another embodiment of the invention, a processing method by using the combined processing machine according to the embodiment comprises the steps of:
normalizing the workpiece by irradiating the workpiece with the near-infrared laser light by the heat treatment tool and then cooling the workpiece in the air to increase a workability of the workpiece; and
subsequently shaping the workpiece by the shaping tool and/or finishing the workpiece by the finishing tool.

### BRIEF DESCRIPTION OF THE DRAWINGS

The preferred embodiments according to the invention will be explained below referring to the drawings, wherein:
FIG.**1** is a plain view showing a combined processing machine in a preferred embodiment according to the invention, where a light focusing head **600** as a heat treatment tool is mounted on a workpiece processing unit **200;**
FIG.**2** is a plain view showing the combined processing machine in the preferred embodiment according to the invention, where the light focusing head **600** is housed in a tool pod **402** of a tool mounting unit **400** by being tool-exchanged after the light focusing head **600** shown in FIG.**1** is mounted on the workpiece processing unit **200;**
FIG. **3** is a perspective view showing a heat treatment tool **504** comprising a laser oscillator, a light focusing head and an optical fiber to provide optical connection between the both of them;
FIG.**4** is a flowchart showing an example of a processing operation by the combined processing machine in the preferred embodiment; and
FIG. **5** is a graph showing a relationship between an oscillation wavelength and an absorptance of workpiece W.

### DETAILED DESCRIPTION OF THE PREFERRED EMBODIMENTS

### Composition of combined processing machine

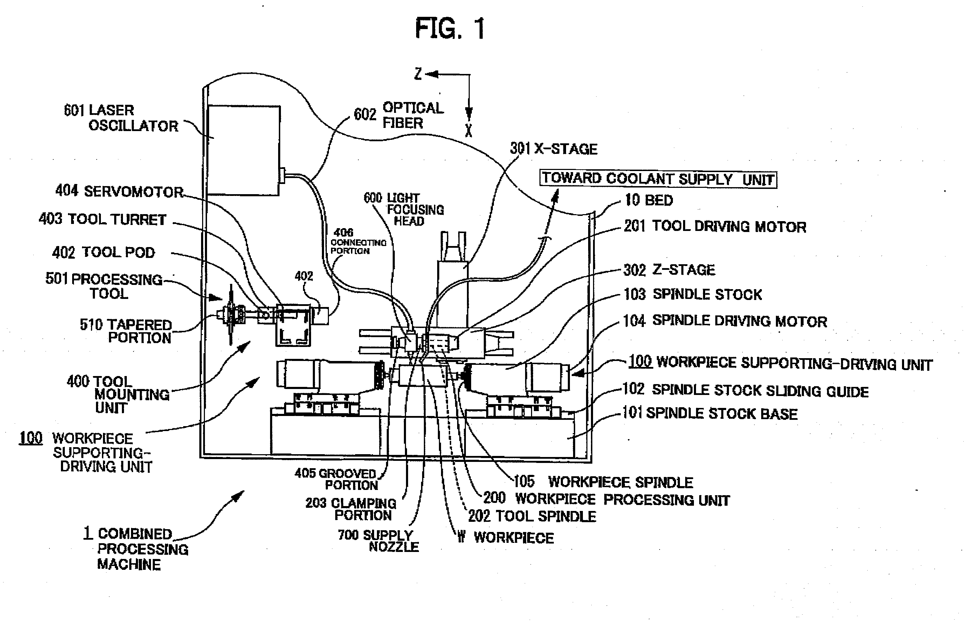

FIG. **1** is a plain view showing a combined processing machine in a preferred embodiment according to the invention, where a light focusing head **600** as a heat treatment tool is mounted on a workpiece processing unit **200.** Meanwhile, in FIG.1, its vertical direction is defined as X-direction, and its horizontal direction is defined as Z-direction.

The combined processing machine **1** is controlled in its whole drive by a computer numerical control (CNC) device (not shown), and comprises a combined processing machine body and attachment devices (not shown). The attachment devices include a laser oscillator, an oil supply unit, a cooling device, an air supply unit, a coolant supply unit, a chip collecting device, and a duct system for connecting these devices to the combined processing machine body.

The combined processing machine **1** is mounted on a bed **10,** and the machine **1** comprises a workpiece supporting-driving unit **100** to support a workpiece W such as a shaft to be rotatably drivable, a X-stage **301** and a Z-stage **302** guided on the bed **10,** to determine a movement and a positioning in X-direction and Z-direction, a workpiece processing unit **200** mounted on the Z-stage **302,** to mount various processing tools as freely attached and removed, and a tool mounting unit **400** to attach or remove the processing tools to or from a certain position of the workpiece processing unit **200.** Further, the workpiece processing unit **200** can be a unit that moves not only in the X-direction and Z-direction by the X-stage **301** and Z-stage **302,** but also within an X-Z plane, for example, by so-called parallel mechanism where closed link mechanisms are disposed in parallel with each other.

The workpiece supporting-driving unit **100** comprises left and right spindle stocks **103** installed in a spindle stock base **101** mounted on the bad **10,** and the spindle stocks **103** being slidably movable through left and right spindle stock sliding guides **102,** and spindle driving motors **104** to rotatably drive a workpiece spindle **105** at a certain rotation speed are installed in the spindle stocks **103.** Each of the left and right spindle stocks **103** can slide in the Z-direction independently, can sandwich the workpiece W between certain cores, and can fix the position of workpiece W.

The workpiece processing unit **200** rotatably drives a tool spindle **202** on which a processing tool **501** is mounted, at a certain rotation speed by a tool driving motor **201,** if the process is conducted by rotations of the processing tool such as a grinding process tool and the workpiece W. Further, the workpiece processing unit **200** is fixed at a certain rotating position, with a certain static stiffness, without the rotation of the tool spindle **202** on which the processing tool **501** is mounted, if the process is conducted by only the rotation of workpiece W without the rotation of the processing tool such as a turning process tool, a heat treatment process tool.

Further, in a case of rotating a process tool such as a grinding process tool, a rotation drive system using gears or belts or a traction drive system utilizing a friction conduction can be also used, other than the rotation drive system using a tool driving motor **201** connected directly to the tool.

The tool spindle **202** comprises a clamping portion **203** to cramp a tapered portion **510** of the processing tool **501,** so that the processing tool **501** and the tool spindle **202** are solidly connected. In particular, the clamping portion **203** is formed based on standards comprising compatibility such as HSK interface standard for the combined processing machine, In the case that the clamping portion **203** is formed based on the HSK interface standard, the tapered portion **510** of the processing tool **501** and the end surface can be solidly connected to the tool spindle **202** by the two-surface contact.

A tool mounting unit **400** is mounted on a certain position of the bed **10,** and has a tool turret **403** with multiple tool pods **402** capable of holding various processing tool **501** and a servomotor **404** to index the tool turret **403** around the X-axis. Inside of the tool pods **402,** a connecting portion **406** is formed with a ball bush such that a grooved portion **405** formed at the end of the processing tools **501** can be detached from the connecting portion **406** when applying a predetermined force or greater thereto.

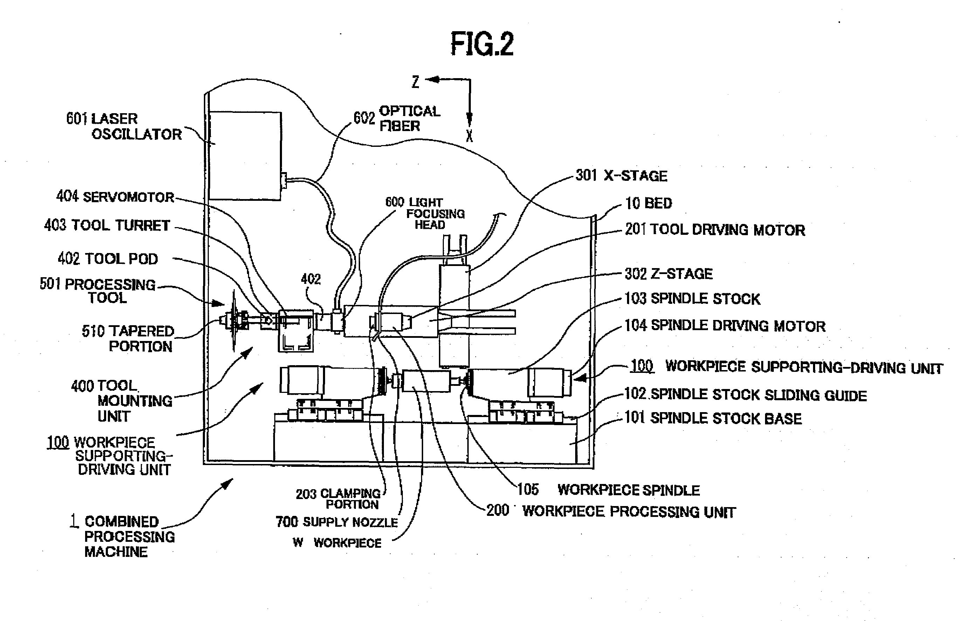

FIG.**2** is a plain view showing the combined processing machine in the preferred embodiment according to the invention, where a light focusing head **600** is housed in the tool pod **402** of the tool mounting unit **400** by being tool-exchanged after the light focusing head **600** shown in FIG.**1** is mounted on the workpiece processing unit **200.** After this, in case of attaching the other processing tool **501** to the workpiece processing unit **200,** the tool turret **403** is rotated by **180** degrees around the X-axis by the servomotor **404,** so as to move the other processing tool **501** to an installable position on the workpiece processing unit **200.** Then, the Z-stage **302** is driven to move the workpiece processing unit **200** to the other processing tool **501** and the other processing tool **501** is fixed to the workpiece processing unit **200** through the clamping portion **203,**

The processing tool **501** includes a turning tool **502** such as a lathe turning electrodeposition wheel used for a turning process, a cutting tool **503** such as a drill and an end mill used for a boring or grooving process, a heat treatment tool **504** such as a laser quenching head, a grinding tool **505** such as a grinding wheel (e.g., a CBN wheel) used for a grinding process, and a surface finishing tool **506** used for a superfinishing, an ELID grinding etc. Herein, the turning tool **502** such as the lathe turning electrodeposition wheel and the cutting tool **503** such as the drill and the end mill used for the boring or grooving process can be collectively called as a shaping tool since they are mainly used to form a shape of the workpiece W. Also, the grinding tool **505** such as the grinding wheel and the surface finishing tool **506** used for the superfinishing or ELID grinding etc. can be collectively called a finishing tool since they are mainly used to render a desired accuracy and surface roughness of the workpiece W. Thus, by using the workpiece processing unit **200** and the tool mounting unit **400,** one processing tool can be selected from the shaping tool, the heat treatment tool and the finishing tool in a predetermined sequence. Meanwhile, the heat treatment tool may be disposed at a preset position instead of being exchanged by the tool mounting unit **400.**

The turning tool **502** includes a fixed turning tool to be used without being rotated, and a rotary tool to be used being rotated such as a lathe turning electrodeposition wheel. Further, the electrodeposition wheel means a wheel embedded bit chips or superabrasives such as diamond, CBN on the periphery of a wheel base material by nickel plating etc., and it is advantageous in tool cost.

The cutting tool **503** used for the boring, the grooving process includes a drill, a tap, an end mill, and a milling tool, and in this case, a direction of rotating power of the tool spindle **202** has to be converted, since the tools described above need a rotating drive around the axis thereof, that is, around the X-axis, but the rotation of the tool spindle **202** is a rotation around the Z-axis. The converting mechanism of the rotating direction can be constituted by, for example, bevel gears, and the bevel gears can be built in the tool. Further, a rotation driving means installed in the tool such as motor can be used, instead of using the rotating power of the tool spindle **202.**

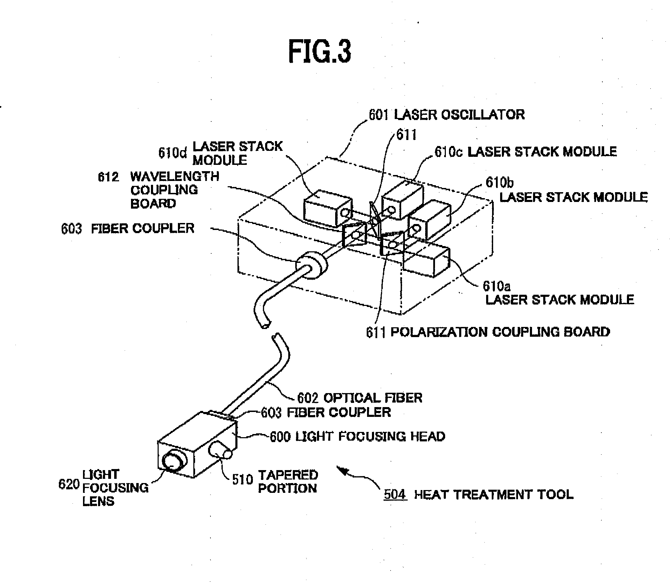

FIG. **3** shows a particular structure of the heat treatment tool **504** comprising the light focusing head **600,** a laser oscillator **601,** and an optical fiber **602.**

The heat treatment tool **504** comprises the light focusing head **600,** the laser oscillator **601,** and the optical fiber **602.** The laser oscillator **601** having a high-power is mounted on, for example, the bed **10,** and the oscillator **601** is optically connected to one end of the optical fiber **602** through an optical fiber coupler **603**, and further the other end of the optical fiber **602** is optically connected to the light focusing head **600** through an optical fiber coupler **603.** The light focusing head **600** comprises a light focusing lens **620** to control a position in the X-direction to the workpiece W, so as to irradiate a laser beam light-guided from the laser oscillator **601** to the workpiece W at a certain beam size. Further, the heat treatment tool **504** is used for a heat treatment such as a quenching, a normalizing, an annealing and a tempering.

Furthermore, when the heat treatment tool **504** is used, it is necessary that heat treatment is performed under the condition that the rotating power of the tool spindle **202** is not used, the tool spindle **202** is fixed with a certain static stiffness, and the light focusing head **600** is fixed to the workpiece processing unit **200.** In this case, the light focusing head **600** can be mounted on a place other than the workpiece processing unit **200,** for example, the bed **10,** instead of being mounted on the workpiece processing unit **200,** and can be also mounted on a certain place, instead of being exchanged by the tool mounting unit **400.**

The laser oscillator **601** comprises laser stack modules **610**a, **610**b, **610**c, and **610**d, polarization coupling boards **611,** and a wavelength coupling board **612.** The laser stack modules **610** are constituted by stacking plural laser light emitting elements so as to have a high output. Each of the laser stack modules **610** performs a beam shaping to have a collimated light with predetermined linear polarization, and then a beam synthesis by the polarization coupling boards **611.**

Directions of polarization of the laser stack modules **610**a, **610**b to be synthesized are perpendicular to each other, for example, in case of the polarization coupling board **611** made of a Polaroid film, laser beam emitted from the laser stack module **610**a is transmitted and laser beam emitted from the laser stack module **610**b is reflected, so that one laser beam is synthesized from the two laser beams. The laser beams **610**c, and **610**d are also synthesized similarly.

The oscillation wavelengths of laser stack modules **610**a, **610**b are set to be different from those of laser stack modules **610**c, **610**d, and a wavelength coupling board **612** has a wavelength filter that transmits one of the different oscillation wavelengths and reflects another of those, so that one laser beam is synthesized on the emission side of wavelength coupling board **612.**

The laser oscillators **601** constituted like this, for example, are stacked with **25** tiers at a distance of **2** mm between emission points, so that the optical output of synthesized laser beam comes to **1** kW. Further, the oscillation wavelength is near-infrared lights of **800** nm to **1000** nm, and in the embodiment, two wavelengths of **800** nm and **830** nm are adopted.

The optical fiber **602** is, for example, a silica optical fiber cable of **600** µm in diameter. The fiber cable length of the optical fiber **602** is set to be long enough for the light focusing head **600,** as shown in FIG. **1,** to move within a certain processing area while being mounted on the workpiece processing unit **200,** and, as shown in FIG.**2**, to move without causing a breaking of the optical fiber **602** and inhibiting free movement of other movable members even when being housed in the tool pod **402.**

The light focusing head **600** has the light focusing lens **620** to focus the laser beam light-guided from the optical fiber **602** through the fiber coupler **603** on a processed surface of the workpiece W at a predetermined beam diameter.

The light focusing lens **620** has one lens or a combination of two lenses or more and, for example, has NA of **0.2** to focus the laser beam on the processed surface of the workpiece W at a predetermined laser beam diameter.

The laser beam diameter to be focused can be controlled according to the position of light focusing head **600** to the processed surface of workpiece W, for example, so that it can be set to vary within the range of **1** mm to **10** mm. Otherwise, a mechanism to move the light focusing lens **620** mounted on the light focusing head **600** in the light axis direction can be installed, so that the distance to the processed surface of the workpiece W can be varied, and the laser beam diameter to be focused can be also varied.

Further, the laser beam to be focused on the processed surface of the workpiece W can have a beam profile of almost rectangular shape. In the beam shaping in each of the laser stack modules **610,** a far-field pattern is formed to an almost rectangular shape, so that the laser beam to be focused on the processed surface of the workpiece W can be also formed, for example, to an almost rectangular shape of **1** mm × 1mm to **10** mm × **10** mm.

In the light focusing head **600,** a tapered portion **510** to be cramped by a clamping portion **203** of the tool spindle **202** is formed. In particular, the tapered portion **510** is formed based on standards comprising compatibility such as HSK interface standard for the combined processing machine.

Further, a supply nozzle **700** as a cooling device to supply a forced cooling fluid such as a coolant to the processed surface of the workpiece W is mounted on the light focusing head **600.** Even when the supply nozzle **700** is not mounted on the light focusing head **600,** the supply nozzle **700** only has to supply the coolant to the processed surface of the workpiece W corresponding to the movement of light focusing head **600.** The coolant supplied may be used commonly with a coolant for the shaping or finishing. The forced cooling means for the processed surface of the workpiece W may include water, air, liquid nitrogen etc. other the coolant.

Alternatively, the heat treatment may be conducted by a self-cooling method where the processed surface of the workpiece W after the heating is naturally cooled instead of using the forced cooling method.

It is preferable that the workpiece processing unit **200** comprises a restraint means such as a brake to keep the tool spindle **202** in a stopped state, a tool driving motor **201** by which the static torque of the tool spindle **202** can be set larger, or a control means comprising a large servo stiffness for stopping rotation to keep the tool spindle **202** in a stopped state. Further, when using tools such as a heat treatment tool **504** which are not used in a rotating state at the processing, the other fixing methods different from the connection of tapered portion **510** and clamping portion **203** can be also used.

A grinding tool **505** includes a CBN wheel comprising CBN (Cubic Boron Nitride) grinding stone, so as to achieve the grinding process with high accuracy.

A surface finishing tool **506** has a built-in vibration means such as an ultrasonic generator to provide vibration for the grinding stone so as to obtain a smooth surface by a superfinishing processing. Further, the surface finishing tool **506** has a grinding stone wheel for ELID grinding process formed by adhering diamond abrasive grains thereto with a cast iron bonding agent, and further has an electrolyte supply means and an electrolysis power source.

### Example 1 of processing operation by combined processing machine

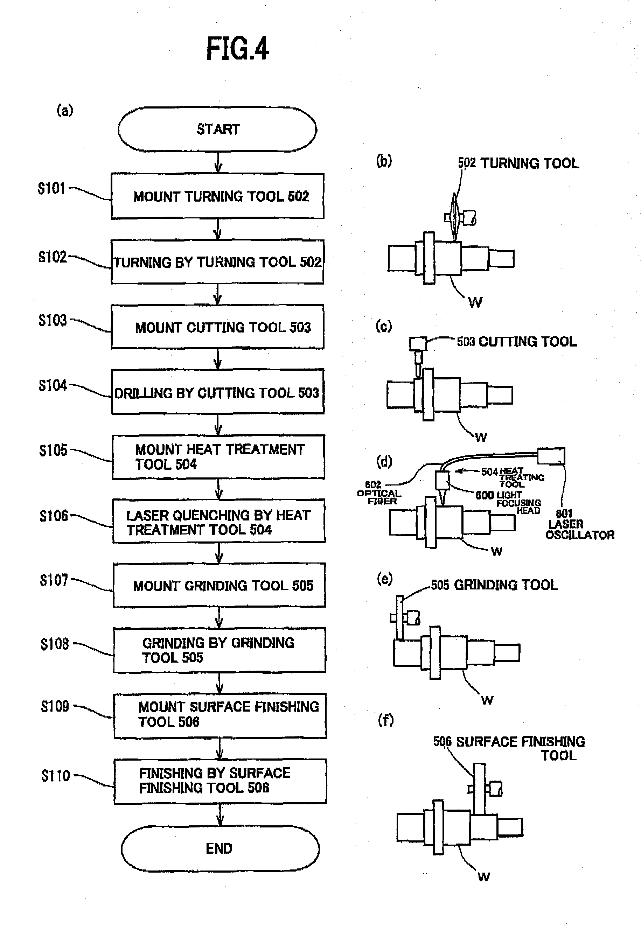

FIG.**4** is a flowchart (FIG.4(a)) showing an example of a processing operation by the combined processing machine in the preferred embodiment. Example **1** of the processing operation comprises a turning process (as illustrated by FIG. 4(b)), a boring process (as illustrated by FIG. 4(c)), a laser quenching treatment (as illustrated by FIG. 4(d)), a grinding process (as illustrated by FIG. 4(e)), and a surface finishing process (as illustrated by FIG. 4(f)), where the processes are performed by the combined processing machine in the preferred embodiment while exchanging the processing tools in a given sequence.

When the workpiece W of a long size is set between the workpiece spindles **105** so as to support the workpiece W, and the process is started, the turning tool **502** is mounted on the workpiece processing unit **200** by the mounting process of turning tool **502** for turning process (S**101)**. Then, the turning tool **502** is rotated at a rotating speed adapted to the material of the workpiece W, so as to perform the turning process (S**102**). By this process, the processing of the outer diameter of the workpiece W is completed.

Then, the boring process is conducted. After the turning tool **502** is housed into the tool turret **403,** the cutting tool **503,** that is, a drill is mounted on the workpiece processing unit **200** (S**103**). The rotations of the workpiece spindles **105** are stopped, and the drill is rotated in a stopped state of the workpiece W so as to cut it up to a certain depth, and the boring process is completed (S**104**).

Then, an on-the-machine quenching is conducted. After the cutting tool **503** is housed into the tool turret **403,** the light focusing head **600** is mounted on the workpiece processing unit **200** (S**105**). The light focusing head **600** is moved at a quenching start position by the X-stage **301** and the Z-stage **302.** The diameter of laser beam to be irradiated from the light focusing lens **620** to the processed surface of the workpiece W is determined by the a position of the light focusing head **600** in the X-direction. The light focusing head **600** is operated to be advanced at a certain speed by the Z-stage **302,** while the workpiece spindles **105** are rotated so as to rotate the workpiece W at a certain rotating speed. Example **1** of the processing operation is performed at a quenching temperature of **1000** °C, where an optical output of laser beam is **1** kW, a size of laser beam on the processed surface is **2** mm × **2** mm, and a quenching speed is **5** mm/s.

The laser beam is irradiated from the light focusing lens **620** to the processed surface of the workpiece W so as to heat it at a temperature of **1000** °C, and the coolant is supplied from the supply nozzle **700** to the processed surface so as to immediate cool it up to almost **200** °C. The quenching process as described above is continuously performed within a certain heat treatment region, so as to provide the workpiece W with the quenching treatment from the surface to the depth of **3** mm (S**106**).

Then, a grinding process is conducted. After the light focusing head **600** is housed into the tool turret **403,** the grinding tool **505 is** mounted on the workpiece processing unit **200** (S**107**). The workpiece W is rotated at a rotating speed adapted to the materials of the grinding tool **505** and the workpiece W, so as to perform the grinding process (S**108**).

Finally, a surface finishing process of the workpiece W is conducted. After the grinding tool **505** is housed into the tool turret **403,** the surface finishing tool **506** is mounted on the workpiece processing unit **200** (S**109**). By the surface finishing tool **506** mounted, the surface finishing process such as a superfinishing process, an ELID process, a lapping process, a polishing process, a buff finishing process is conducted (S**110**). According to the successive processes described above, almost all the processes from the shaping process to the finishing process can be achieved by only one combined processing machine. Further, in the Example **1** of processing operation described above, a processing operation that the shaping process, the heat treatment and the finishing process are combined together is shown, but a processing operation that the shaping process and the heat treatment are combined together, or a processing operation that the heat treatment and the finishing process are combined together can be easily applied.

In the above embodiment of the invention, the heat treatment tool can be detached from the workpiece processing unit and tool-exchanged by the tool mounting unit. However, another preferred embodiment of the invention may be also made in which the heat treatment tool is previously (always) attached to a different site than the mounting site of the shaping tool and the finishing tool on the workpiece processing unit.

### Example 2 of processing operation by combined processing machine

Normalizing is conducted up to a depth corresponding to a portion to be eliminated by the grinding or finishing process prior to the grinding process (S**108**) or the finishing process (S**109**) in Example **1** as described earlier. After the light focusing head **600** is mounted on the workpiece processing unit **200,** the light focusing head **600** is moved to a normalizing start position by the X-stage **301** and the Z-stage **302.** The diameter of laser beam irradiated from the light focusing lens **620** to the processed surface of the workpiece W is determined by a position of the light focusing head **600** in the X-direction. The light focusing head **600** is operated to be advanced at a certain speed by the Z-stage **302,** while the workpiece spindles **105** are rotated so as to rotate the workpiece W at a certain rotating speed. In the Example **2** of processing operation, the normalizing is performed by heating the processed surface of the workpiece W at a temperature of **900** °Cbeing not less than A3 transformation point, and cooling (standing to cool) it in the air. The other processes are conducted similarly to Example 1.

According to the preferred embodiment in the invention, the following advantages can be achieved.

(**1**) The heat treatment process such as the on-the-machine quenching which is difficult to perform by conventional machine tools can be conducted between a crude processing and a finishing without removing the workpiece W from the spindle, so that a processing method comprising a collective, consistent, and efficient process can be realized,

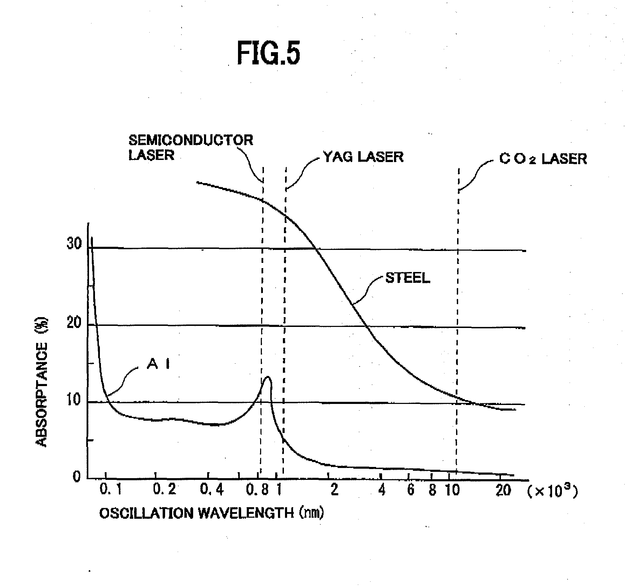

(**2**) Since the near-infrared semiconductor laser with an oscillation wavelength of **800** nm to **1000** nm is used as a laser oscillator, the absorptance of workpiece W is higher than that of the other lasers. FIG.**5** is a graph showing the relationship between an oscillation wavelength and an absorptance of workpiece W. The near-infrared semiconductor laser provides an absorptance for workpiece W much higher than a CO₂ laser with a wavelength of **10.6** µm **(=10.6 × 10³** nm) and higher than even an Nb-YAG laser with a wavelength of **1.06** µm **(=1.06 × 10³** nm). Thus, when the near-infrared semiconductor laser is used as a laser oscillator for steels where a heat treatment process such as a quenching process is frequently conducted, the processing efficiency can be enhanced. Further, the workpiece W made of aluminum (Al) material has an absorptance peak near **800** nm. Therefore, a shortening of lead time and a decrease in process cost can be drastically enhanced, and the laser oscillator can be constituted by a compact size, so that the installation area of the processing machine can be decreased.

(**3**) Various heat treatments can be performed to the workpiece W as the heat treatment process by changing the heat treatment condition. The normalizing process as shown in Example **2** of processing operation can be performed during the successive processing operation, on-the-machine, and by one chucking, other than the quenching process shown in Example **1** of processing operation. Metal structure can be refined by the normalizing process, so that strength and toughness thereof can be enhanced. By this, the workability in the shaping process and the finishing process of the workpiece W is also enhanced.

Although the invention has been described with respect to the specific embodiments for complete and clear disclosure, the appended claims are not to be thus limited but are to be construed as embodying all modifications and alternative constructions that may occur to one skilled in the art which fairly fall within the basic teaching herein set forth.

A combined processing machine has a workpiece processing unit that is operable to move within a X-Z plane defined by an X-axis preset in a predetermined direction and a Z-axis perpendicular to the X-axis, a heat treatment tool to apply a heat treatment to a workpiece, and a tool mounting unit that is adapted to attach at least one of a shaping tool to shape the workpiece and a finishing tool to finish the workpiece to the workpiece processing unit. The heat treatment tool has a light focusing head to focus a light supplied through a light guiding portion from a laser oscillator on the workpiece.

## Claims

1. A combined processing machine (1), comprising:
a workpiece processing unit (200) that is operable to move within a X-Z plane defined by an X-axis preset in a predetermined direction and a Z-axis perpendicular to the X-axis;
a heat treatment tool (504) to apply a heat treatment to a workpiece (W); and
a tool mounting unit (400) that is adapted to attach at least one of a shaping tool (502, 503) to shape the workpiece and a finishing tool (505, 506) to finish the workpiece (W) to the workpiece processing unit (200),
**characterized in that** the heat treatment tool (504) comprises a light focusing head (600) to focus a light supplied through a light guiding portion (602) from a laser oscillator (601) on the workpiece (W).

2. The combined processing machine (1) according to claim **1,** wherein:
the heat treatment tool (504) is previously attached to the workpiece processing unit (200).

3. The combined processing machine (1) according to claim **1** or **2,** wherein:
the heat treatment tool (504) is attached to the workpiece processing unit (200) selectively in combination with at least one of the shaping tool (502, 503) and the finishing tool (505, 506) .

4. The combined processing machine (1) according to any one of claims **1** to **3,** wherein:
the laser oscillator (601) comprises a semiconductor laser to oscillate a near-infrared laser light at a wavelength of **800** nm to **1000** nm, and
the light guiding portion (602) comprises an optical fiber.

5. The combined processing machine (1) according to any one of claims **1** to **4,** wherein:
the light focusing head (600) is fixed to the workpiece processing unit (200) through a clamping portion (203).

6. The combined processing machine (1) according to any one of claims **1** to **5,** further comprising:
a cooling device that is operable to immediately cool the workpiece (W) heated by a near-infrared laser light emitted from the heat treatment tool (504) to quench the workpiece (W).

7. The combined processing machine (1) according to claim **6,** wherein:
the cooling device comprises a coolant supplying nozzle (700) to supply a coolant to the workpiece (W) during the shaping or the finishing.

8. A processing method by using the combined processing machine (1) according to any one of claims **1** to **7,** comprising the steps of:
normalizing the workpiece (W) by irradiating the workpiece (W) with a near-infrared laser light by the heat treatment tool (504) and then cooling the workpiece (W) in the air to increase a workability of the workpiece (W); and
subsequently shaping the workpiece (W) by the shaping tool (502, 503) and/or finishing the workpiece (W) by the finishing tool (505, 506).
